# EUROPEAN PATENT SPECIFICATION

(11) **EP 1 893 029 B1**
(45) Date of publication and mention of the grant of the patent: **09.09.2009**
(21) Application number: 06747251.4
(22) Date of filing: 01.06.2006
(51) Int. Cl.: A22B 5/20

(54) **APPARATUS FOR SEPARATING SPINOUS PROCESSES FROM HALF-CUT CARCASS OF SLAUGHTERED ANIMAL**
GERÄT ZUM ABTRENNEN VON DORNFORTSÄTZEN VON TIERISCHEN SCHLACHTKÖRPERHÄLFTEN
APPAREIL DE SEPARATION DES APOPHYSES EPINEUSES D'UNE CARCASSE D'UN ANIMAL ABATTU DECOUPEE EN DEUX

(30) Priority: 21.06.2005 JP 2005180057
(43) Date of publication of application: 05.03.2008
(73) Proprietor: Mayekawa Mfg. Co., Ltd., Tokyo 135-0046 (JP)
(72) Inventor: INOMATA, Shuichi, MINAMIKYUSHU CHIKUSAN, Soo-gun, Kagoshima 8998605 (JP); OHBA, Yuichi, c/o MAYEKAWA MFG.CO., LTD., Tokyo 1350046 (JP); CHIMURA, Takeshi, c/o MAYEKAWA MFG.CO., LTD., Tokyo 1350046 (JP); TOYODA, Naoki, c/o MAYEKAWA MFG.CO., LTD., Tokyo 1350046 (JP)
(74) Representative: Adorno, Silvano
(86) International application number: PCT/JP2006/311662
(87) International publication number: WO 2006/137277

(56) References cited:
- EP-A- 0 392 874
- EP-A- 0 502 581
- WO-A-03/028469
- US-A- 5 655 960
- PATENT ABSTRACTS OF JAPAN vol. 2003, no. 10, 8 October 2003 (2003-10-08) & JP 2003 164253 A (TOYO NETSU KOGYO KK; TPG KK), 10 June 2003 (2003-06-10)

## Description

### Technical Field

The present invention relates to an apparatus for separating spinous processes from half-cut carcass of slaughtered animal, wherein a pair of half-cut right and left blocks of carcasses of slaughtered animals such as pigs, cows and sheep are hung and conveyed and the spinous processes are automatically separated from the carcasses, thereby greatly improving an operational efficiency.

### Background Art

In conventional dissection process of slaughtered animals such as pigs and so on, a belly portion is cut and bled, internal organs are taken out, a carcass is cut along a center line of a backbone in order to obtain a pair of half-cut right and left blocks of the carcasses. Then, a shoulder butt, a loin, a boned rib and a ham (in case of a pig) and so on are divided and further bones of each of the divided blocks are taken away.

There are various conventional backbone cutters for obtaining the half-cut block of the carcass. For example, JP2002-209509A discloses an automatic cutter wherein an ultrasonic sensor detects the centerline of the backbone of the slaughtered body by the reflected image of the ultrasonic wave and a saw is entered along the detected centerline, thereby precisely cut the slaughtered body along the backbone centerline.

Further, JP2004-261166A discloses a spine separation apparatus which is used before the backbone cutting, in order to separate the spinous backbone from the red meat.

Concretely, in JP2004-261166A, the blades are inserted from right and left sides of the spinous bone, then moved downward, thereby cutting and separating the backbone from the red meat.

### Disclosure of Invention

However, it is required to separate spinous processes from the carcasses in the above-mentioned four blocks (a shoulder butt, a loin, a boned rib and a ham) of the pig divided from the half-cut blocks.

Further, the conventional separation apparatuses in Europe are large-sized and complicated, because two blades are used for separating spinous processes of a whole slaughtered body with its head.

It is true that EP-A-0502581 discloses an apparatus for separating spinous processes from the carcass of a slaughtered animal which is cut in halves along its backbone comprising transport means for the resulting right and left carcass halves, a sensor station on the path of said transport means to detect cutting positions where the spinous processes are cut and a cutting station downstream of the sensor station for separating the spinous processes from the carcass halves according to said cutting positions, but the endless conveyor belt described therein for transporting the carcass halves does not allow the required full accessibility thereof by the cutting blades.

The spine separation apparatus in JP2004-261166A is far from complete automation, because an operator has to inspect positions of the two blades, pushes a plurality of switches for driving the two blades, thereby aligning the positions of the two blades.

Further, it is not easy in Japan to make up an automatic mechanism, because it is not easy to fix and align the carcass whose head is usually cut away beforehand.

In order to solve those problems, an object of the present invention is to facilitate the fixation and the alignment of the carcass without head, without employing any large-scale mechanism for separating spinous processes from the carcass of the slaughtered animal such as a pig, a cow, or a sheep, thereby providing an automated apparatus, excluding human operations and greatly improving the operation efficiency.

First, the apparatus of the present invention separates said spinous processes from a carcass of a slaughtered animal which is half-cut from a backbone. The apparatus comprises: transport means for hanging and transporting a pair of right and left carcasses which is half-cut from a backbone; a sensor station which is disposed at a transport path of said transport means and detects cutting positions where spinous processes of right and left carcasses are cut; and a cutting station which is disposed at a downstream of said sensor station and separates said right and left spines from said right and left carcasses hung by said transport means, on the basis of said cutting positions.

Thus, the cutting end position is detected in the detecting station and the cutting blade is inserted and moved at a prescribed position in order to obtain the meat in the cutting station.

The transport means: hangs said carcass which is apart toward a right and a left side from said backbone, without changing an original attitude, and is hung by an ankle by using a hanging member; transports intermittently said carcass in a horizontal line; and stops said carcass at a prescribed sensing position in said sensor station and at a prescribed cutting position in said cutting station.

Thus, the carcass is stopped precisely at the prescribed sensor position and cutting position. Second, the sensor station comprises: fixing means for fixing said hanging member at said prescribed sensing position and at said prescribed cutting position.

Thus, the carcass is stopped precisely at the prescribed sensor position and cutting position, without any oscillation. Third, the sensor station comprises: end detection means for detecting an upper cutting end and a lower cutting end of said spinous processes; and oscillation suppress means for suppressing oscillation of said carcass, when said upper cutting end and said lower cutting end are detected, wherein said end detection means are provided, between said right and left carcasses, with detecting jigs which can move up and down, and said upper cutting end and said lower cutting end are prescribed positions at which said detecting jigs contact an upper reference position and a lower reference part of said carcass.

Thus, the carcass is cut without any unnecessary operation of the cutting blade.

Fourth, said upper reference part is a pubis bone; and said lower reference part is an antebrachial bone root.

Thus, the carcass is cut at a maximum yield of obtaining the meat, even when the carcass is of different shape and size.

Fifth, said cutting station comprises: a work opening guide which enters between said pair of right and left carcasses from belly sides and widens a distance between said pair of right and left carcasses; a backbone fixing guide which enters between said pair of right and left carcasses from backbone sides and contacts and fixes a backbone cutting surface; a pair of right and left cutting blades which enter between said pair of right and left carcasses from said backbone sides and are fixed in a horizontal direction in such a manner that said pair of right and left cutting blades contacts root hollows between said right and left spinous processes and right and left mammillary processes; and holding means for holding said pair of right and left carcasses, when said pair of right and left cutting blades is inserted into said pair of right and left carcasses, or when said pair of right and left cutting blades cuts and separates said right and left spinous processes from said right and left carcasses.

Thus, the distance between the right and left hand side carcasses is guaranteed for the backbone contact guide to surely be inserted, whereby the cutting blade is surely inserted between the spinous processes and the mammillary processes.

Sixth, said backbone fixing guide has a roller of which surface contacts a tip of said backbone.

Thus, the carcass is surely fixed at the prescribed position, because the carcass is fixed both at the back bone cutting surface and at the end surface of the backbone, and the fixing guide descends smoothly on the back bone cutting surface, together with the cutter, with its roller fixing the carcass.

Seventh, the apparatus further comprises: horizontally moving means for moving said pair of right and left cutting blades to and from said pair of right and left carcasses; and vertically moving means for moving said pair of right and left cutting blades vertically together with said backbone fixing guide, wherein said pair of right and left cutting blades is inserted, at said upper cutting end, between said pair of right and left carcasses, then, is moved downward and is moved out, at said lower cutting end, from the carcasses.

Thus, the meat is surely separated from the spine, because the backbone fixing guide fixes the carcass.

Eighth, the apparatus further comprises an ankle holding means in the cutting station, which comprises: a carcass holding member which moves toward said carcass from a belly side; a hollow part which is provided in said holding member and loosely fits a pair of an ankle of said carcass; and a holding surface which is provided at an lower and outer portion of said carcass holding member and has a tapered surface that opens in a direction from an inside to an outside of said carcass, thereby and contacting a ham of said carcass and giving a torsion force directed from an outside to an inside of said carcass.

Thus, the oscillation of the carcass is more effectively suppressed by the ankle holding means.

### Brief Description of Drawings

FIG. 1 is an elevational view of the whole apparatus of the present invention.
FIG. 2 is a left side view of whole apparatus as shown in FIG. 1.
FIG. 3 is a plan view of the whole apparatus as shown in FIG. 1.
FIG. 4 is a plan view of whole apparatus as shown in FIG. 1 except a carcass transportation unit.
FIG. 5A is a plan view of the carcass transportation unit (carcass forward) and FIG. 5B is its elevational view.

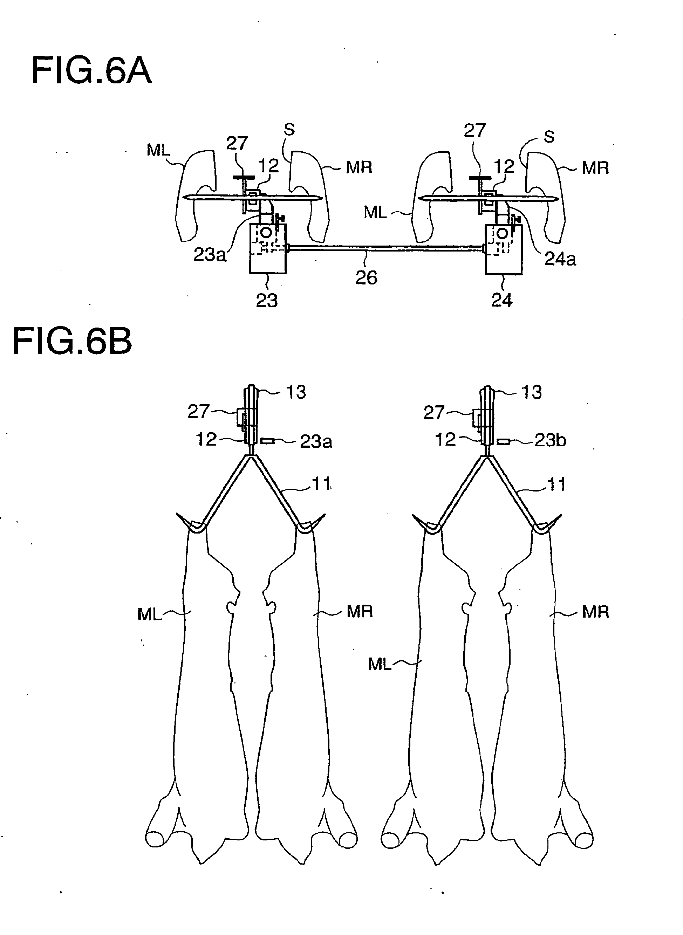

FIG. 6A is a plan view of the carcass transportation unit (stopper forward) and FIG. 6B is its elevational view.
FIG. 7A is a plan view of the gambrel fixing means (before fixing) in the sensor station S and FIG. 7B is its elevational view.
FIG. 8A is a plan view of the gambrel fixing means (after fixing) in the sensor station S and FIG. 8B is its elevational view.
FIG. 9 is a perspective view of the detection apparatus for detecting the cut upper end of the spine.
FIG. 10 is a perspective view of the detection apparatus for detecting the cut upper end of the spine.
FIG. 11 is a perspective view of the detection apparatus for detecting the cut lower end of the spine.
FIG. 12 is a perspective view of the detection apparatus for detecting the cut lower end of the spine.
FIG. 13A is a plan view of the carcass fixing means (before forwarding) which stops at the cutting position in the cutting station C and FIG. 13B is its elevational view.
FIG. 14A is a plan view of the carcass fixing means (after forwarding) which stops at the cutting position in the cutting station C and FIG. 14B is its elevational view.
FIG. 15A is a plan view of the carcass fixing means (arm opened) which stops at the cutting position in the cutting station C and FIG. 15B is its elevational view.
FIG. 16A is a plan view of the work open guide (before forwarding) in the cutting station C and FIG. 16B is its elevational view.
FIG. 17A is a plan view of the work open guide (after forwarding) in the cutting station C and FIG. 17B is its elevational view.
FIG. 18A is a plan view of the cutter unit (before forwarding) in the cutting station C and FIG. 18B is its elevational view.
FIG. 19A is a plan view of the work open guide (after forwarding and after fixing) in the cutting station C and FIG. 19B is its elevational view.
FIG. 20 is an elevational view of the ankle holding means in the cutting station C.
FIG. 21 is a plan view of the ankle holding means in the cutting station C.
FIG. 22 is a side view of the ankle holding means in the cutting station C.
FIG. 23A is a plan view of the cutter unit (after forwarding) in the cutting station C and FIG. 23B is its elevational view.
FIG. 24A is a plan view of the work open guide (after forwarding and after fixing) in the cutting station C and FIG. 24B is its elevational view.
FIG. 25A is a plan view of the cutter unit (while descending) in the cutting station C and FIG. 25B is its elevational view.
FIG. 26A is a plan view of the spinous processes and the mammillary processes and FIG. 26B is its side view.
FIG. 27A is a plan view of the cutting blade in the cutting station C, FIG. 27B is its elevational view., FIG. 27C is a plan view when the carcass is inserted, FIG. 27D is a side view of FIG. 27C and FIG. 27E is a cross sectional view taken on line "e" of FIG. 27B.
FIG. 28A is a plan view of the conventional cutting blade, FIG. 28B is its elevational view., FIG. 28C is a plan view when the carcass is inserted, FIG. 28D is a side view of FIG. 28C and FIG. 28E is a cross sectional view taken on line "e" of FIG. 28B.

### Best Mode for carrying out the Invention

Preferred embodiment of the present invention is explained, referring to the drawings. It should be understood that the present invention is not limited to specifically described sizes, materials and relative arrangements and so on of the constituent components.

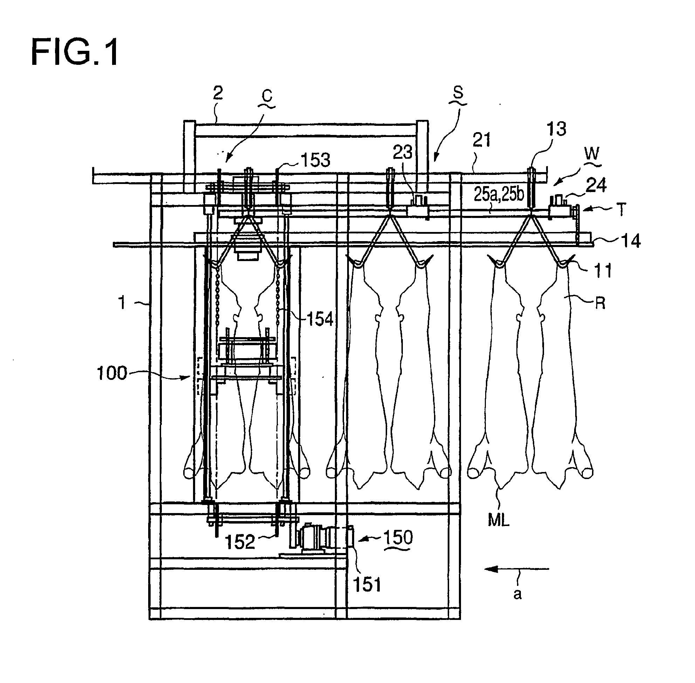

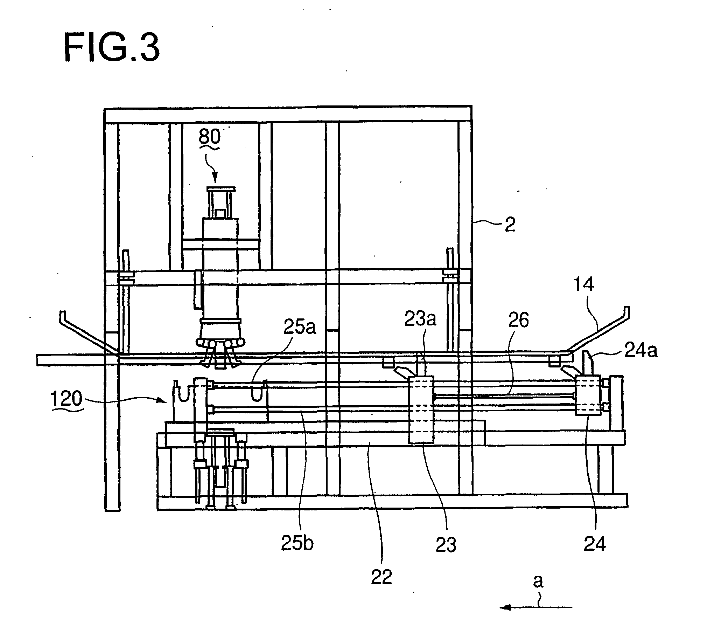

As shown in FIG. 1 through FIG. 4, the spine separation apparatus of the present invention comprises a vertical frame 1, a horizontal frame 2, a transport unit T for transporting carcasses in a right row and a left row, a waiting station W, a sensor station S and a cutting station C. A pair of half-cut carcasses MR and ML of which head and internal organs are cut way is hung from a gambrel stick 11 by an Achilles tendon of an ankle and is transported by the transport unit T along a direction shown by an arrow "a". Here, a trolley 13 for supporting the gambrel stick 11 slides on a rail 21.

There is disposed in the transport unit T an air cylinder 22 of which piston is fixed with a first pusher 23 which is supported by support rods 25a and 25b, thereby transporting the gambrel stick 11 by a prescribed distance along the arrow "a". The second pusher 24 is connected with the first pusher 23 by a connecting rod 26 and slides on the support rods 25a and 25b together with the first pusher 23.

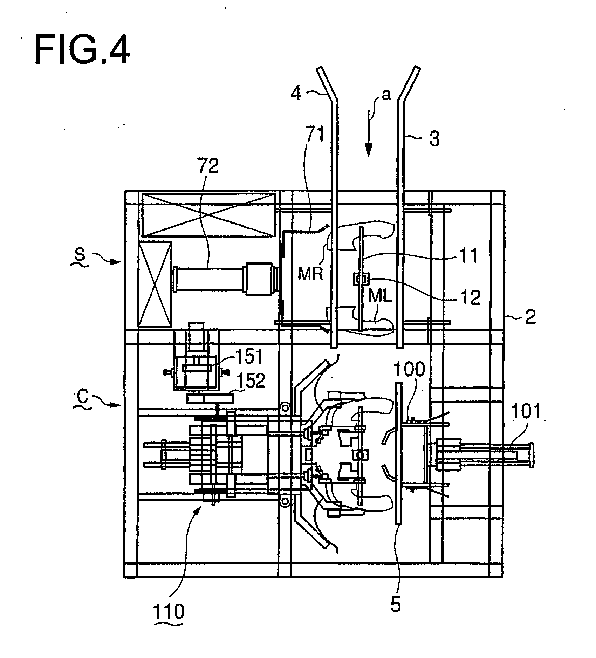

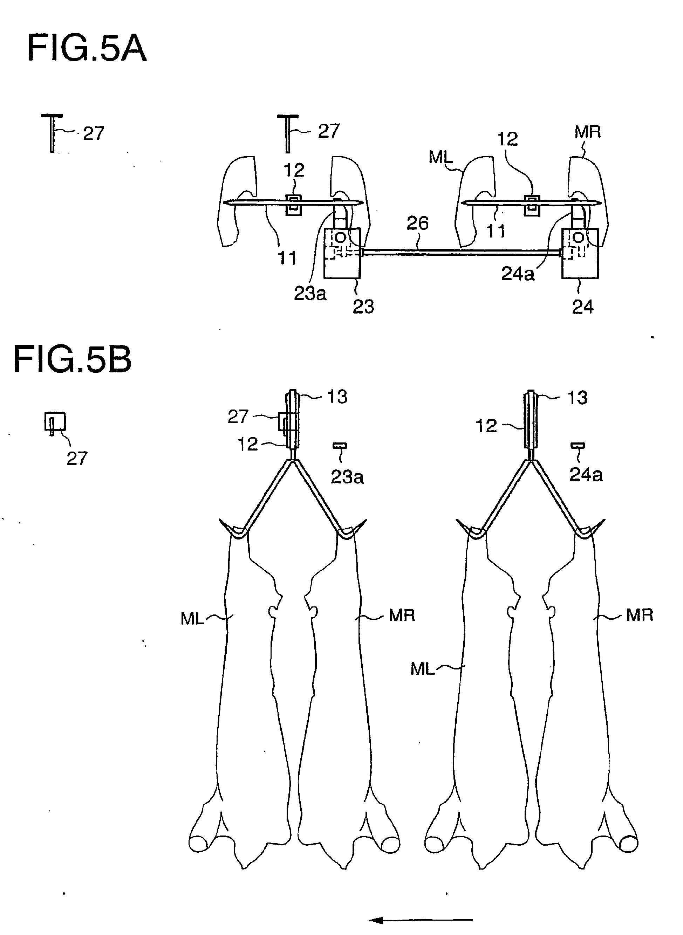

As shown in FIG. 4 and FIG. 5, the air cylinder 22 moves the first and second pushers 23 and 24 along the arrow "a", pushes a base portion 12, transports the carcasses MR and ML and stops the carcasses MR and ML, by a pushed-out stopper 27, at a spinous processes detection position in the sensor station and at a cutting position in the cutting station.

The gambrel stick 11 is moved back and forth. When the gambrel stick 11 returns back, the gambrel stick 11 is inclined along the arrow "a" direction.

Further, a round rod 14 is horizontally disposed, in order to avoid an oscillation of the gambrel stick 11.

When the carcass stops at the above-mentioned detection position in the sensor station S and at the above-mentioned cutting position in the cutting station C, the trolley 13 and the gambrel stick 11 are fixed at those positions, thereby avoiding position shifts of the carcass.

Here, the gambrel stick fixation in the sensor station S is different from that in the cutting station C.

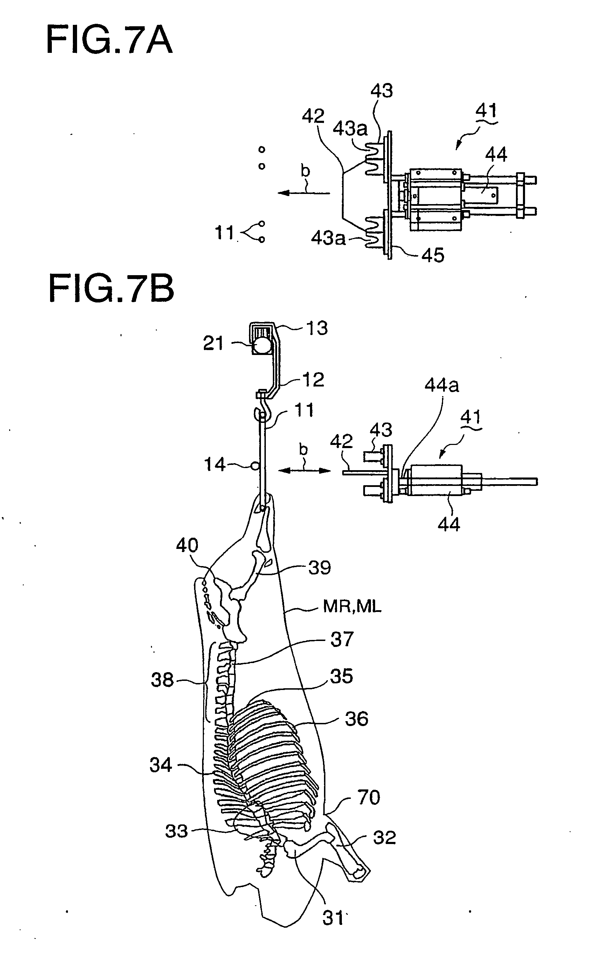

A fixing unit 41 in the sensor station S is shown in FIG. 7A. The carcasses MR and ML shown in FIG. 7B includes a humerus 31, an antebrachial bone 32, a shoulder blade 33, a spinous process 34, rib 35, rib cartilage 36, a backbone 37, a lumrod 38, thighbone 39, an ischium 40 and a shoulder root 70.

A guide plate 42 horizontally disposed has tapered portions. A fixing block 43 has four grooves 43a into which the gambrel stick 11 is fitted. The guide plate 42 and the fixing block 43 are horizontally disposed on a base plate 45 fixed with the piston 44a of the air cylinder 44. The gambrel stick fixing unit 41 moves back and forth along the arrow "b".

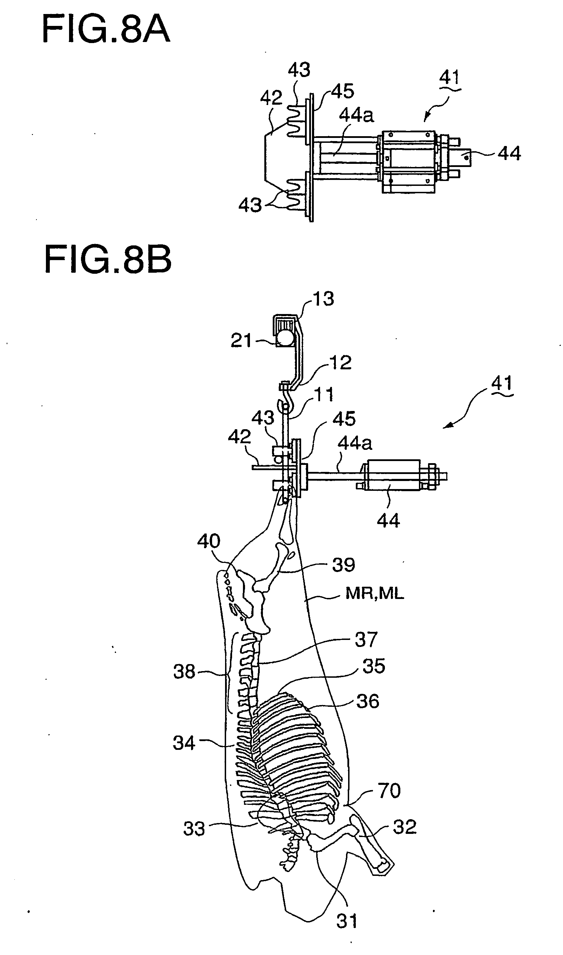

When the gambrel stick 11 stops at the prescribed position by the stopper 27, the base plate 45 is pushed out, along the arrow "b", by the air cylinder 44. The guide plate 42 is inserted into the gambrel stick 11, in order to execute the centering of the carcass, and then, the gambrel stick 11 is fitted into the groove 43a of the fixing block 43, thereby fixing the gambrel stick 11 at a prescribed detection position. FIG. 7A shows the gambrel stick 11 before being fixed, while FIG. 8 A shows the gambrel stick 11 after being fixed.

Next, a sensing process in the sensor station S in order to decide an insertion position of a spinous processes separation cutter in the cutting station C is explained.

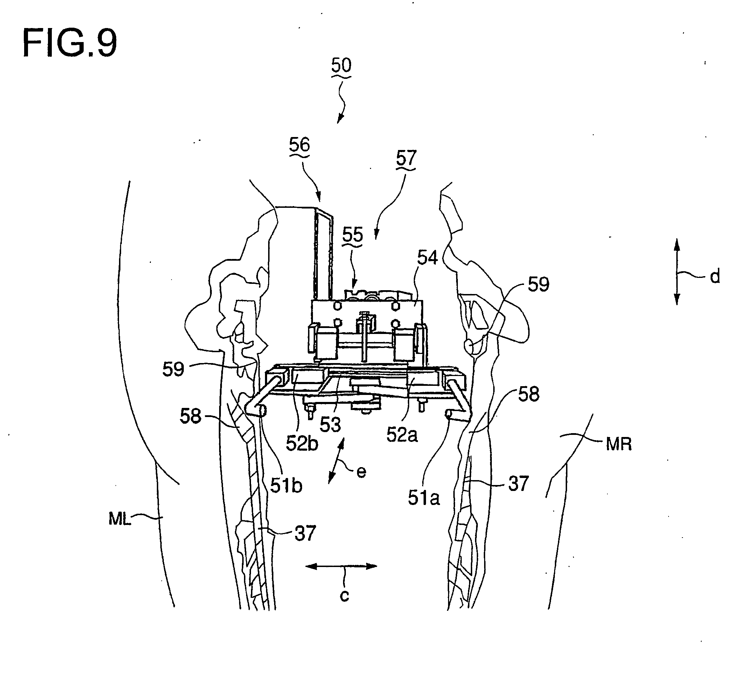

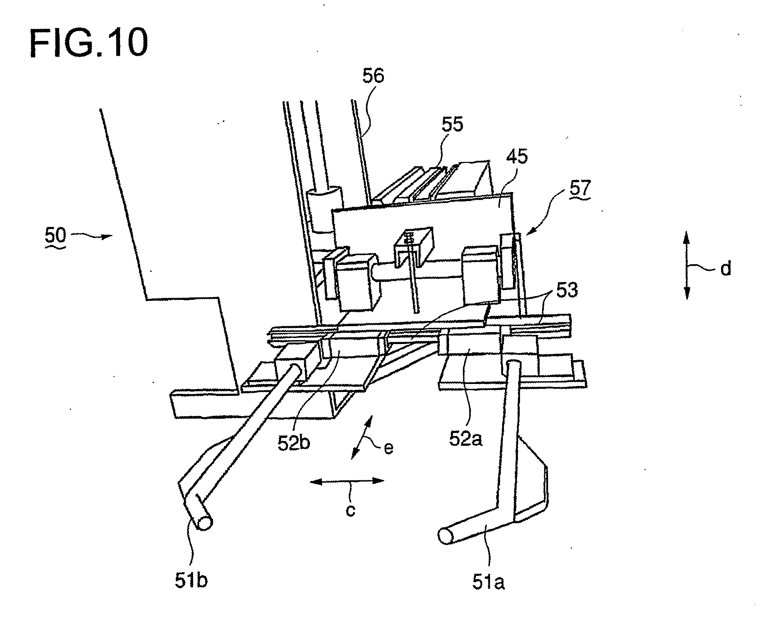

FIG. 9 and FIG. 10 are perspective views of an upper cutting end sensing apparatus 50 for detecting the upper end of the spinous processes 34 (cf. FIG. 7A). The upper cutting end sensing apparatus 50 comprises detecting jigs of round rods 51a and 51b which are supported by sliders 52a and 52b which slide along a horizontally disposed rail 53 along "c" direction. Accordingly, the detecting jigs 51a and 51b slide along "c" direction.

A detecting unit 57 comprises the detecting jigs 51a and 51b, the sliders 52a and 52b, the rail 53 and a base plate 54 for fixing the rail 53. The detecting unit 57 moves back and forth by a forwarding mechanism 55 of an air cylinder and moves along the vertical direction by an elevator 56 of a not-shown servo motor.

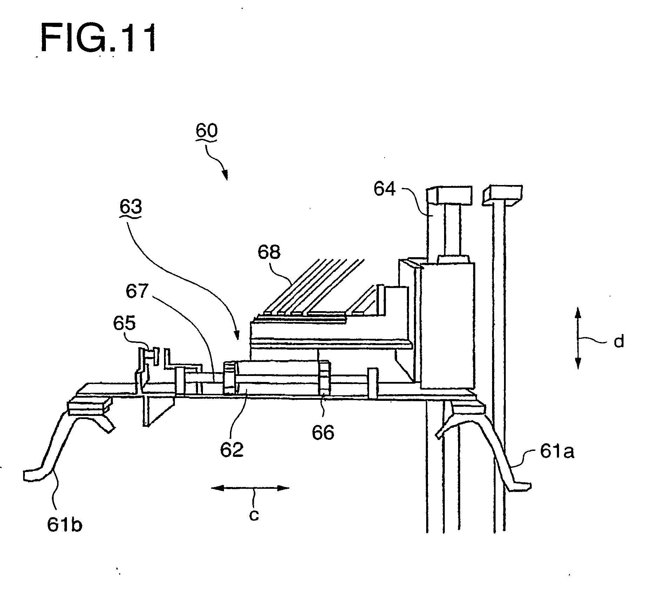

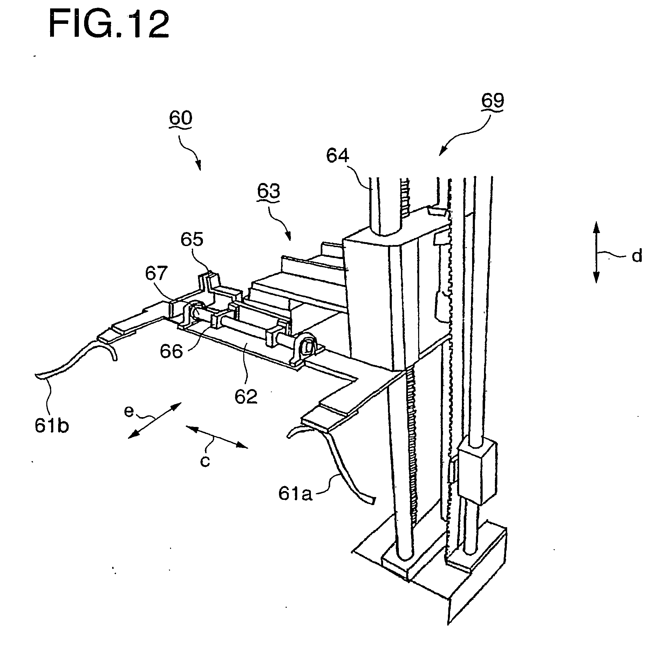

FIG. 11 and FIG. 12 are perspective views of a lower cutting end sensing apparatus 60 for detecting the lower end of the spinous processes. The lower cutting end sensing apparatus comprises detecting jigs 61a and 61b of round rods which are fixed by a support plate 62 which is supported through a fulcrum 67 by a support bracket 66 fixed with a detecting unit 63. Accordingly, the detecting jigs 61a and 61b incline along "c" direction around the fulcrum 67. The detecting unit 63 moves back and forth in a direction as shown by an arrow "e", relative to the carcass, by a forwarding mechanism 68 of an air cylinder. Further, the detecting unit 63 moves upward and downward in a direction as shown by an arrow "d", relative to the carcass, by an elevator 69 (the same as the elevator 56 as shown in FIG. 10) of a not-shown servo motor.

A sensor 65 senses an inclination of the detecting jigs 61a and 61b, when they descend and contact the shoulder root 70 as shown in FIG. 7B, thereby being inclined upward a little. Thus, the inclined position is the lower end of the spinous processes 34 as shown in FIG. 7B.

As shown in FIG. 4, a pushing arm 71 is a U-shaped arm of which tips are tapered and opened outward. The center portion of the pushing arm 71 is connected with an air cylinder 72. The pushing arm 71 is pushed out, by the air cylinder 72, toward the carcasses, when the carcasses MR and ML hung by the gambrel stick 11 stops at the detection position, whereby the carcasses MR and ML are pushed from the right and left sides toward the center and the oscillation of the carcasses MR and ML are stopped.

The carcasses MR and ML are hung by the gambrel stick 11 and are carried into the sensor station S, guided by guide rails 3 and 4.

When the carcasses MR and ML stop at the prescribed position, the pushing arm 71 is pushed out from the backside of the carcasses MR and ML toward the carcass side, in order to push the carcasses from the right and left hand toward the center, thereby stopping the carcass oscillation. Then, the detecting unit 57 of the upper cutting end sensing apparatus 50 and the detecting unit 63 of the lower cutting end sensing apparatus 60 are pushed out from the belly side toward the carcass side.

In the upper cutting end sensing apparatus 50 as shown in FIG. 9, the detecting unit 57 as a whole moves forward and the detecting jigs 51a and 51b enter between the right thigh and the left thigh. The detecting jigs 51a and 51b slide outside and contact the backbone 37 or the tail bones 58. Then, during the ascend of the detecting unit 57 by the elevator 56, the detecting units 51a and 51b grind the surface of the backbone 37 or the tail bones 58. When either one of the detecting jigs 51a and 51b contacts a pubic bone 59 over the tail bone 58, the detecting unit ascends and the detecting jig 51a or 51b holds the contact state by its spring force.

A not-shown sensor fixed on the base portion of the detencting unit 57 determines the position where the sensor reacts. The determined position is the upper detection position and the detecting unit 57 stops ascending. After determining the detection position, the detecting unit 57 returns to the usual waiting position.

The detecting unit 63 moves forward toward the carcass side, simultaneously when the lower cutting end sensing apparatus 60 as a whole moves forward and descends by a not-shown servo motor. Concretely, when the detecting jigs 61a and 61b contact the shoulder root 70 as shown in FIG 7B, the lower cutting end sensing apparatus 60 as a whole descends and the detecting jig 61a or 61b holds the contact position by their spring forces. The sensor 65 senses the time when the spring forces are acted. Thus, the position at which the sensor 65 reacts is the lower detection position and the sensor 65 stops.

Thus, the upper and lower end cutting position of the spinous processes are detected.

Next, the composition of cutting station C are explained.

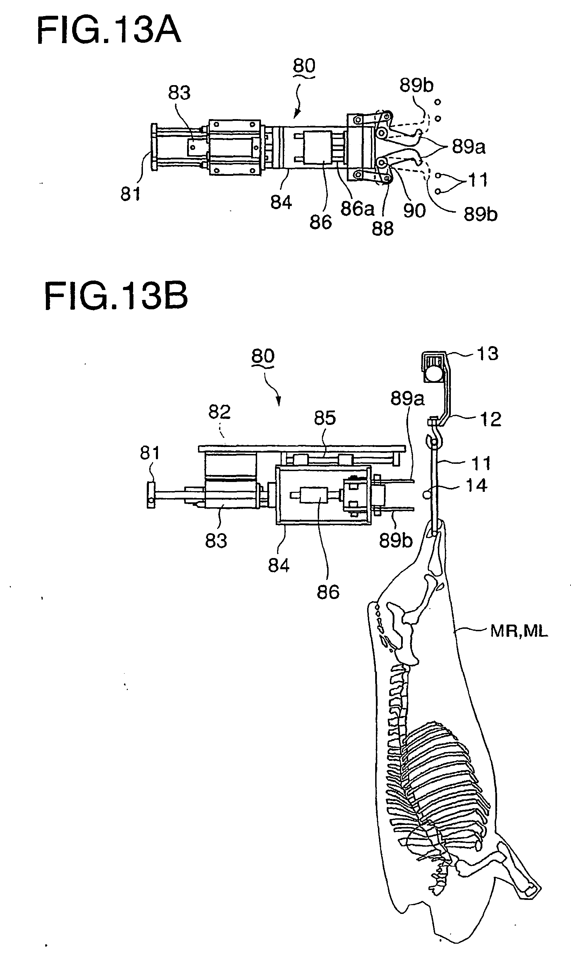

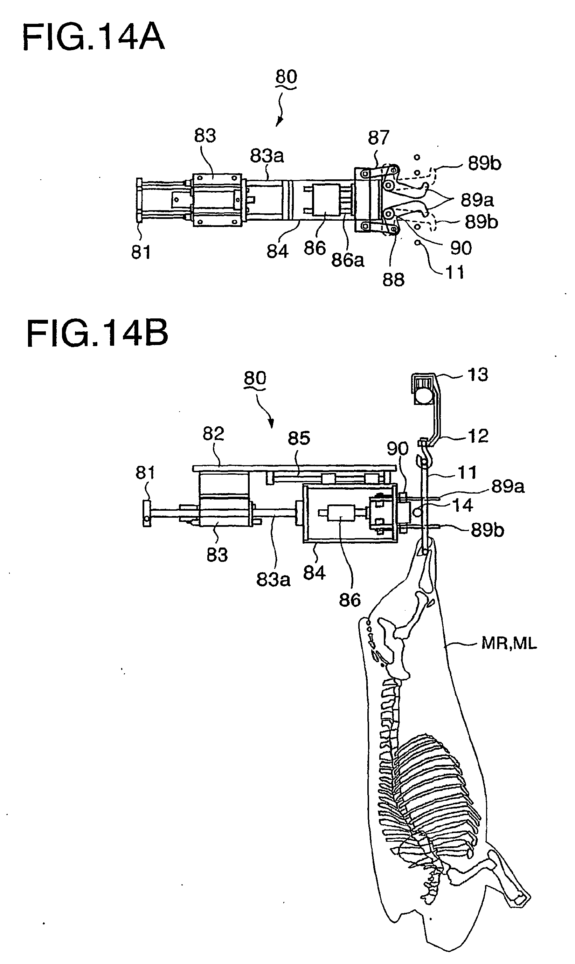

As shown in FIG. 13 through FIG. 15, a fixing apparatus 80 fixes the carcass which is stopped at the cutting position in the cutting station C fixed with a base portion 82. An end of an air cylinder 83 fixed with the base portions 81 and 82 is fixed with a box 84 which is supported by a guide rail 85 of the base portion 82. Thus, the box 84 slides along the rail 85, as the piston 83a slides.

An air cylinder 86 is provided in the box 84. A piston 86a of the air cylinder 86 is connected, through a link 87 and a fulcrum88, with two pairs of arms 89a and 89b which are vertically separated and can be rotated around an axes 90.

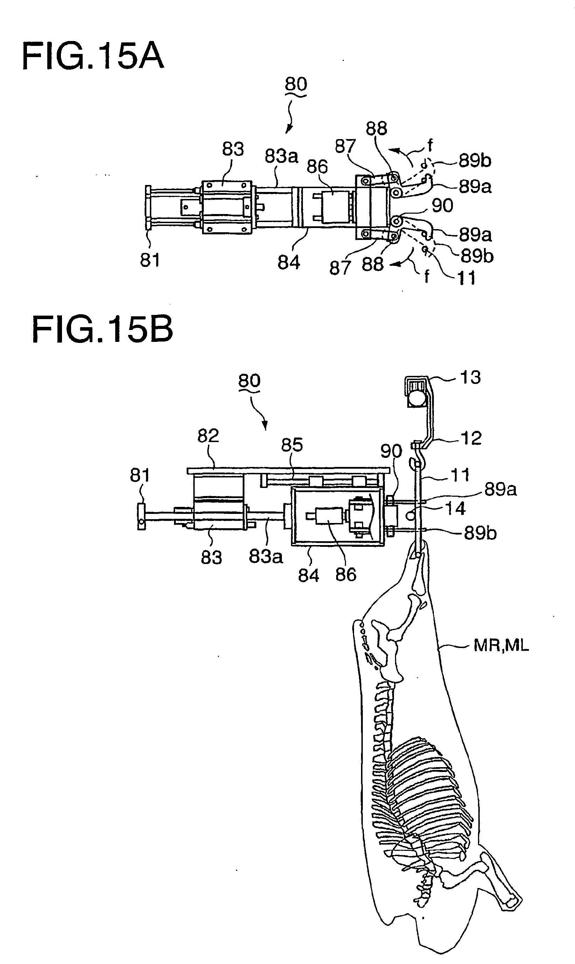

As shown in FIG. 13 through FIG. 15, the air cylinder 83 moves the box 84 toward the carcasses MR and ML stopped at the cutting position, thereby entering the arms 89a and 89b in the gambrel stick 11. Then, the piston 86a is pulled toward the air cylinder 86, thereby opening the arms 89a and 89b along the direction "f" as shown in FIG. 15 and accordingly fixing the gambrel stick 11. The lower arm 89b is opened more widely than the upper arm 89a, because the gambrel stick 11 is opened in the downward direction.

If the cutting process is completed, the fixing apparatus 80 closes the arms 89a and 89b and return back from the carcasses MR and ML.

Next, the cutting process is explained.

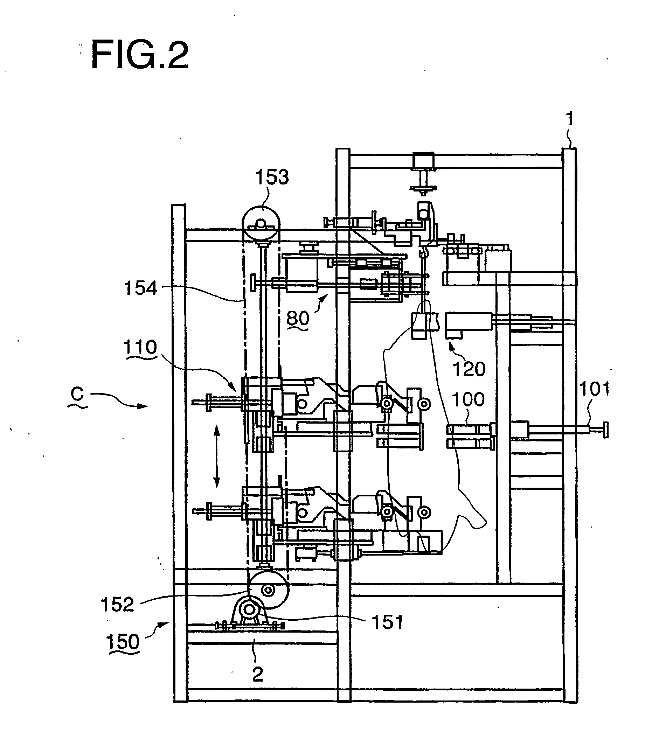

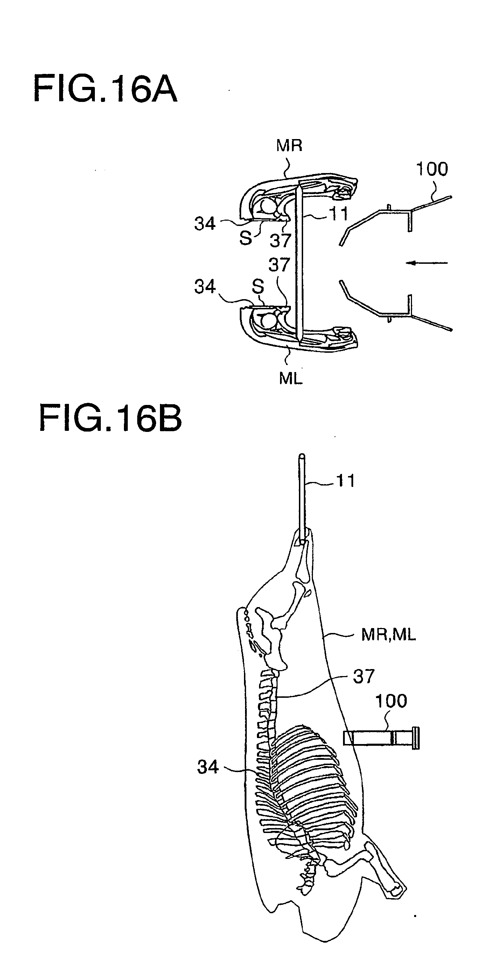

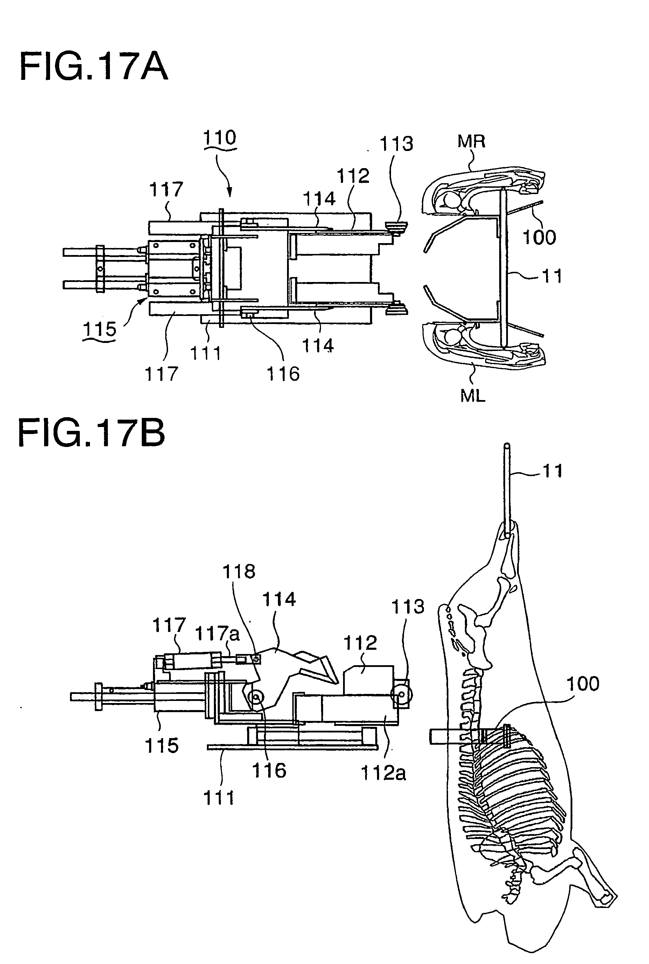

As shown in FIG. 16 and FIG. 17, a work opening guide 100 is inserted, from the belly side, between the right and left carcasses MR and ML. As shown in FIG. 2, The work opening guide 100 moves toward and away from the carcasses by an air cylinder 101. The work opening guide 100 widens a little the separation between the right carcass MR and the left carcass ML, thereby surely entering a backbone guide 112 as shown in FIG. 17 from the backbone side.

The backbone guide 112 in a cutter apparatus 110 is inserted between the widened carcass pair MR and ML from the back bone side. Here, there is shown in FIG. 16 a spinous processes 34 and a backbone 37 of the carcass which is cut, at the backbone center line, into the right and left portions.

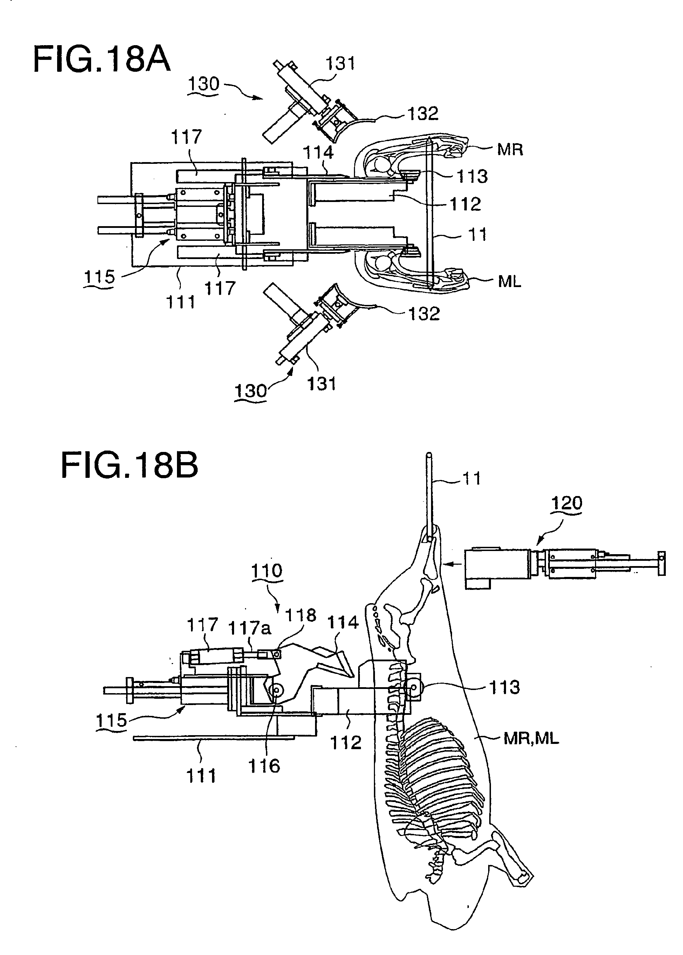

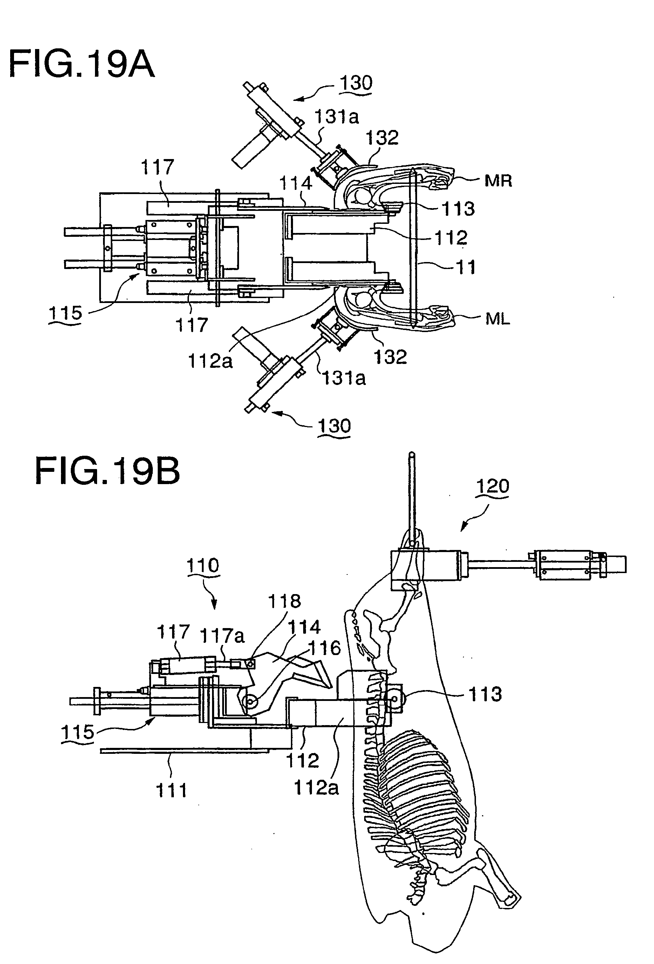

The backbone guide 112 moves on the base plate 111. Rollers 113 is fixed with an end of the backbone guide 112. As shown in FIG. 18 and FIG. 19, when the backbone guide 112 is inserted between the carcasses, the outer surfaces of the rollers 113 contact the backbone 37, prevents the carcass from osciallating, thereby facilitating the descend of the cutter apparatus 110.

A pair of cutting blades 114 rotate, relative to a cutter unit 115, around an fulcrum 116 and move, together with the cutter unit 115, to and from the carcasses. Further, the cutting blades 114 can be inclined around the fulcrum 116, because the blades 114 is connected, at a fulcrum 118, with a piston 117a of an air cylinder 117 fixed with the cutter unit 115.

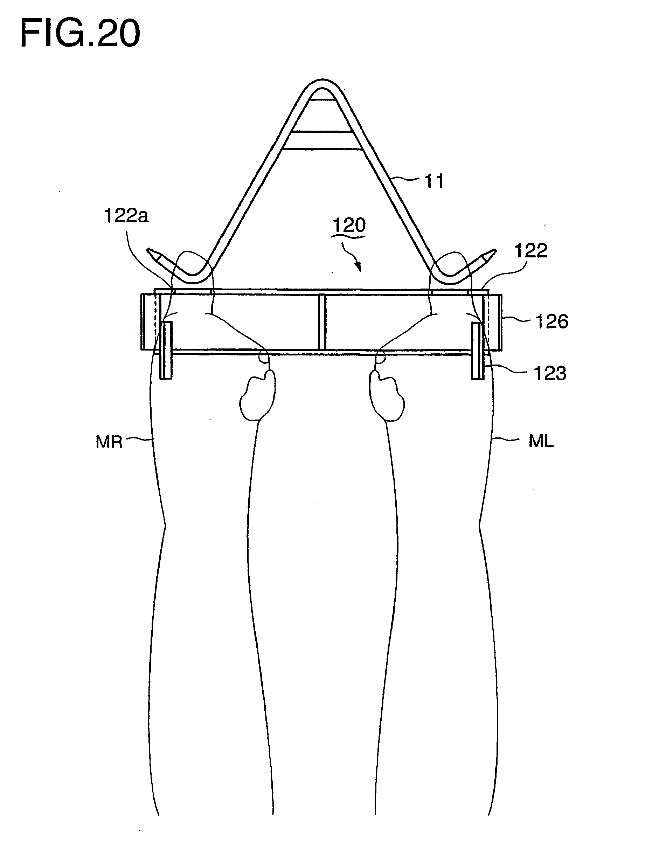

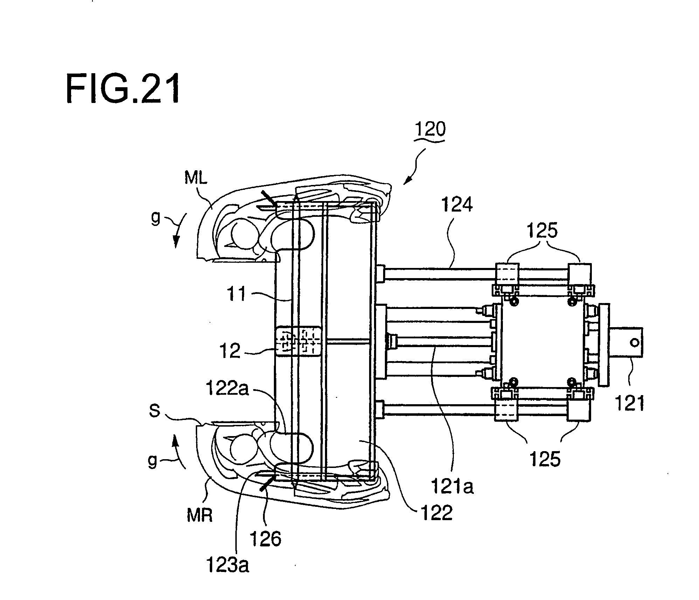

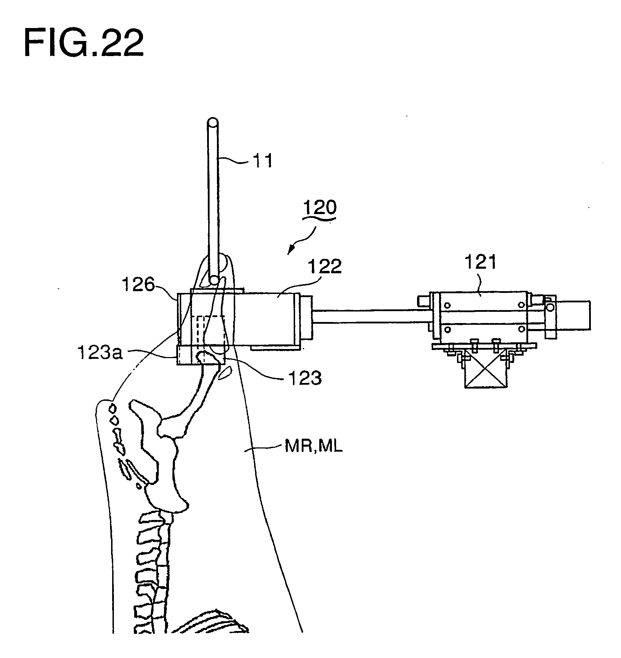

Next, referring to FIG. 20 through FIG. 22, an ankle pushing apparatus 120 as shown in FIG. 18 and FIG. 19 is explained. The ankle pushing apparatus 120 pushes the right and left ankles, when the right and left spinous processes are cut. There is provided, in the horizontal direction at an end of a piston 121a of an air cylinder 121, a pushing member 122 which has hollows 122a for loosely fitting the carcasses MR and ML. There are provided, at both front side ends of the pushing member 122, tapered plates 126 which are directed toward the outside of the carcasses MR and ML, as shown in FIG. 21. Further, there are provided, at the lower insides of the tapered plates 126, plates 123 which have tapered surfaces 123a directed to the outside of the carcasses MR and ML. Support guides 125 push the pushing plate 122 fixed with stiffening rods 124.

When the carcasses are stopped at the cutting position in the ankle pushing apparatus 120 in the cutting station C, the work opening guide 100 is inserted between the carcasses from the belly side, then, the backbone guide 112 is inserted between the carcasses from the backbone side. Next, before inserting the cutting blades 114 into the carcasses, the ankle pushing apparatus 120 horizontally moves forward toward the carcasses, thereby loosely fitting the ankles into the hollows 122a. Thus, the oscillation of the carcasses is stopped. When the ankles of the carcasses are fitted into the hollows 122a, the plates 123 rub the thighs below the ankles and gives torsion forces in a direction as shown by an arrow "g" as shown in FIG. 21 which allows the carcasses to come a little toward the center of the right and left row of the carcasses MR and ML. Accordingly, the oscillation of the carcasses are effectively prevented, thereby suley inserting the cutting blades 114 between the spinous processes and the mammillary processes.

As shown in FIG. 16 and FIG. 17, the work opening guide 100 moves backward, when the ankle pushing apparatus 120 pushes the ankles.

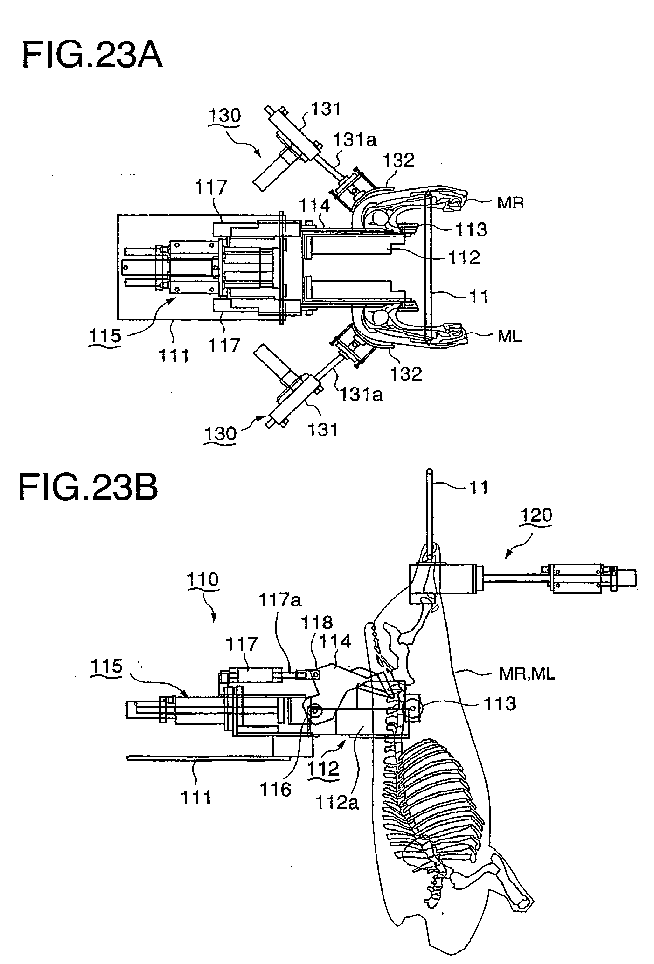

When the backbone guide 112 is inserted between the carcasses MR and ML, a guide surface 112a contact the cut surface of the carcasses, thereby fixing the carcasses. Then, as shown in FIG. 18 and FIG. 19, before moving forward the cutter unit 115 toward the carcass, a first carcass holding members 130 obliquely moves toward the carcasses and holds the carcass, as shown in FIG. 23A. The first carcass holding members 130 has curved portions 132 fixed with an end of a piston 131a of an air cylinder 131. The curved portions 132 are of shapes complementary to the carcass surfaces, thereby holding the carcasses from right and left sides.

After holding the carcass, the cutter unit 115 horizontally moves forward toward the carcass. The right and left cutting blades 114 are inserted between the right and left spinous processes and the right and left meats attached to the spinous processes.

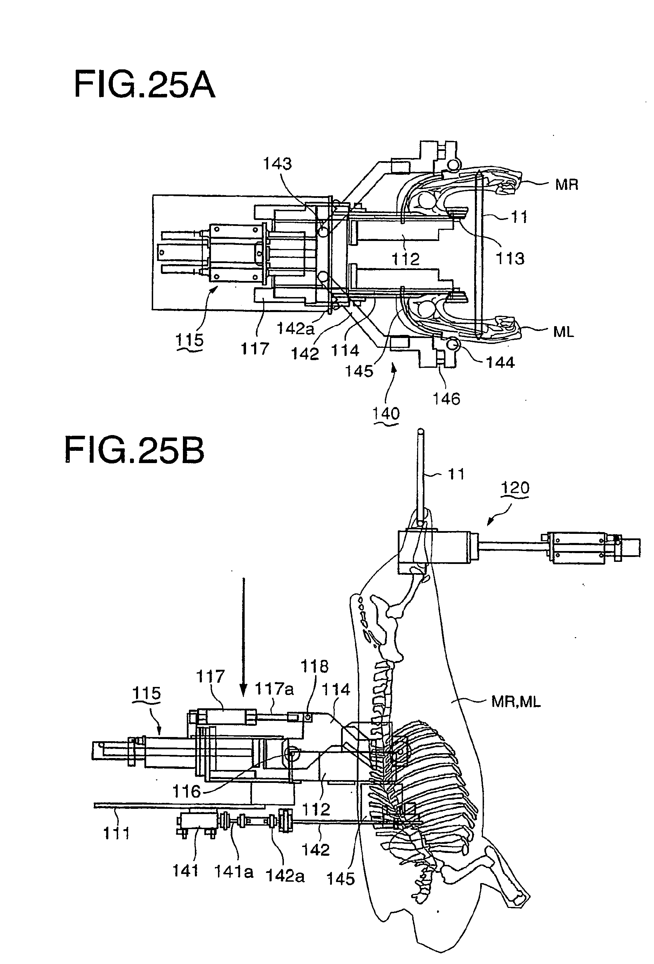

Next, the separation process of meat from spinous processes is explained, referring to FIG. 23A through FIG. 25B.

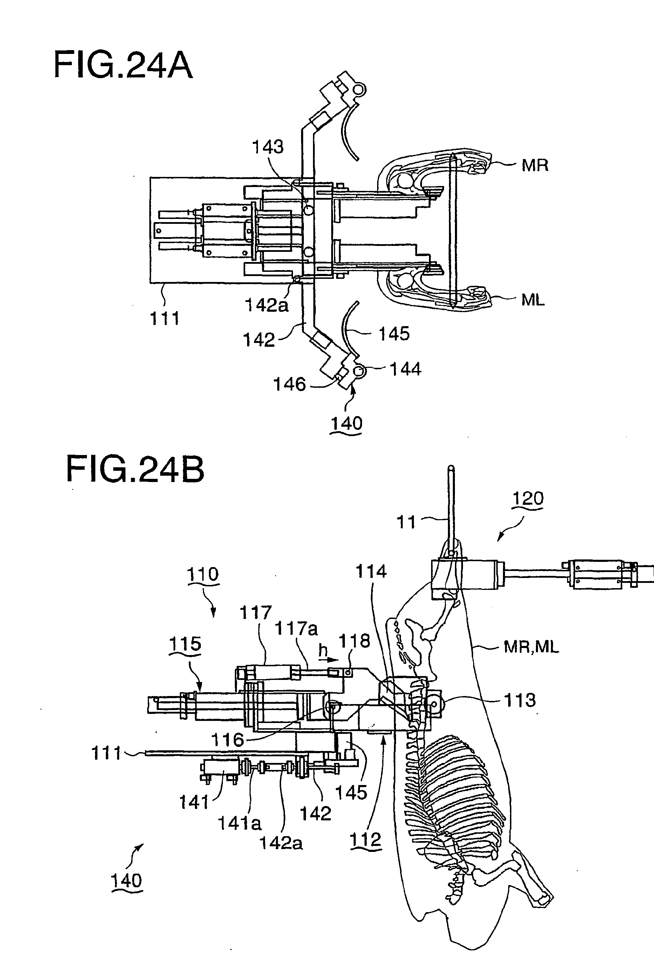

Holding the carcasses by the first carcass holding member 130, the cutter unit 115 is moved forward and a pair of the cutting blades 114 are inserted along the spinous processes. After inserting the cutting blades 114, the first carcass holding members 130 are separated from the carcasses and second carcass holding member 140 as shown in FIG. 24A hold the carcasses.

The second carcass holding member 140 is fixed on the lower surface of the base plate 111. A piston 141a of an air cylinder 141 of the second carcass holding member 140 is connected with rotating arms 142 and fulcrums 142a. An end of the rotating arm 142 is supported by the fulcrum 143 on the base plate 111, while another end of the rotating arm 142 with a rotating curved portion 145 for holding the carcass is supported by the fulcrum 144. A spring 146 is provided between the rotating curved portion 145 and the rotating arm 142. Even if the shape of the curved portion 145 is different from that of the carcass, the mis-fit is adjusted by the force of the spring 146. The second carcass holding member 140 and the cutter apparatus 110 are unified and accordingly the second carcass holding member 140 descends together with the cutter apparatus 110.

As shown in FIG. 24B, after inserting the cutting blades 114, the piston 117a of the air cylinder 117 is drawn out in a direction as shown by an arrow "h" and is inclined downward a little, then, the second carcass holding members 140 hold the carcasses and the cutter apparatus 110 descends in order to separate the spinous processes 34 from the carcasses 37.

Here, a drive apparatus for descending and ascending the cutter apparatus 110 is explained. A servo motor 151 as shown in FIG. 2 is fixed with the horizontal frame 2. A driving sprocket wheel 152 is connected with an axis of the servo motor 151, while a slave sprocket wheel 153 is provided at an upper frame. A chain 154 is tensioned between the sprockets and the cutter apparatus 110 is fixed with the chain 154. The cutter apparatus 110 driven by the servo motor 151 descends together with the chain 154 during the cutting process and ascends to the original position after completing the cutting process.

Here, the guide rail 5 as shown in FIG. 4 disposed horizontally in the cutting station C may be moved forward toward the carcasses, thereby holding the carcasses.

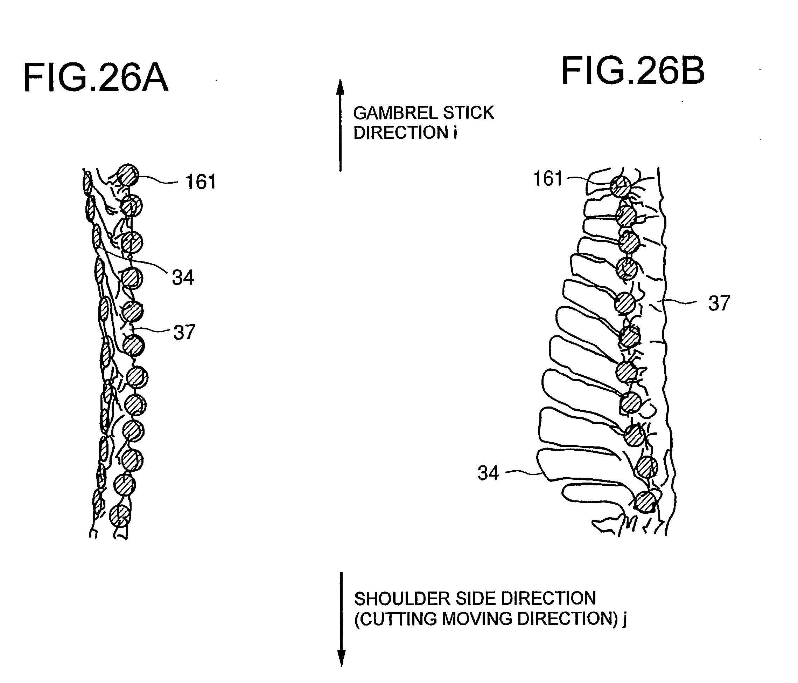

As shown in FIG. 26A and FIG. 26B, the mammillary processes 161 project from the surface of the backbone 37 in such a manner that the mammillary processes 161 alternatively stand side by side in a row parallel to another row of the spinous processes 34.

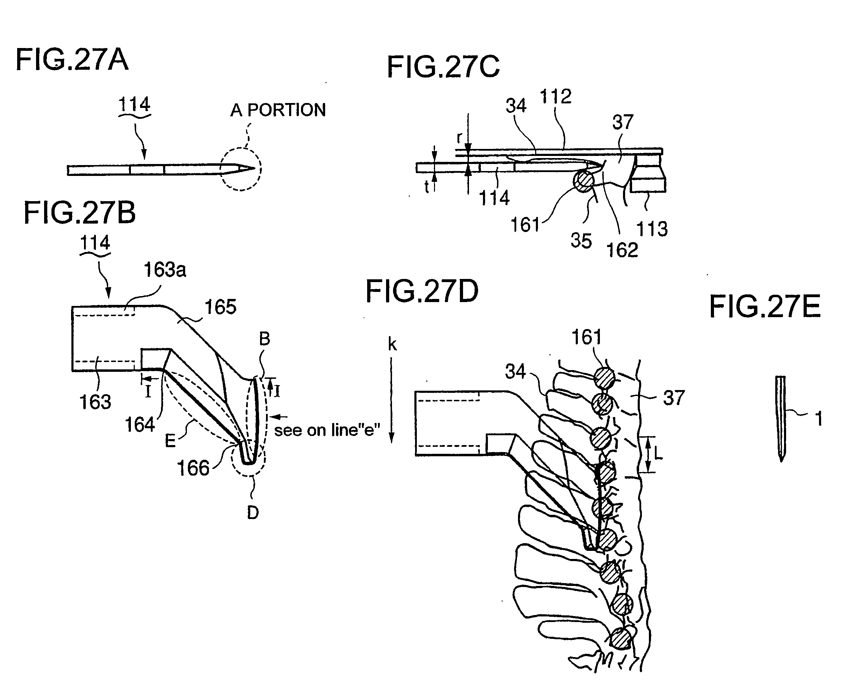

FIG. 27A through FIG. 27 (e) show the shape of the cutting blade 114 and the inserting position of the cutting blade 114. A "A" portion as shown in FIG. 27A, i.e., a region "I" as shown in FIG. 27B, is a double-ground blade which can be easily inserted between the spines 34 and the carcass MR and ML. As shown in FIG. 27C and FIG. 27(d), the pointed tip of the cutting blade 114 is inserted into a hollow root 162 between the spine 34 and the nipple 161.

A distance "r" between the backbone guide 112 and the cutting blade 114 may be preferably about 5 mm. A thickness "t" of the cutting blade 114 may be preferably about 10 mm. A distance between the backbone guide 112 and the pointed tip of the cutting blade 114 may be preferably about 9 though 12 mm.

As shown in FIG. 27B, the cutting blade 114 comprises a base plate 163, a blade body 165 extending from the base plate 163 through a first bent portion 164 and a blade tip D bent, at a second bent portion 166, bent in the same direction as the blade body 165. Here, there is provided, at the base plate 163, a tapered surface 163a for a not-shown grasping member.

A linear backbone contact portion B is substantially parallel to the edge of the base plate 163.

As shown in FIG. 23B, the right and left cutting blades 114 are inserted, with the blade tips D being inclined upward, into the right and left carcasses MR and ML, respectively, when the piston 117a of the air cylinder 117 is moved back a little and the blade tips D are moved forward and inserted between the spinous processes 34 and the carcasses MR and ML by utilizing the spinous processes as guides.

As shown in FIG. 24B, after inserting the cutting blades 114, the piston 117a is moved forward in a direction as shown in an arrow "h" and the blade tip D is inclined downward vertically Thus, when the cutting blades 114 descend, the backbone contact portions B contact the root hollows, thereby functioning as guides. Thus, the blade tips D cut the carcasses from the root of the spines 34 and slanted portions E separate, at the root sides of the spinous processes 34, the carcasses from the spinous perocesses 34, as shown in FIG. 24B. According to the carcass separation at the root of the spine 34, the core of loin meat is not damaged. Further, the cutting blade does not come out from between the spines 34, thereby stably maintaining a high yield for obtaining the carcass.

Here, a length of the backbone contact portion B is preferably longer than a spinous process to spinous process distance, in order to prevent the detachment of the cutting blade from the gap of the spinous processes. Further, the length of the contact portion B is preferably two or three times longer than the spinous process to spinous process distance, in order to reduce a friction during the carcass separation.

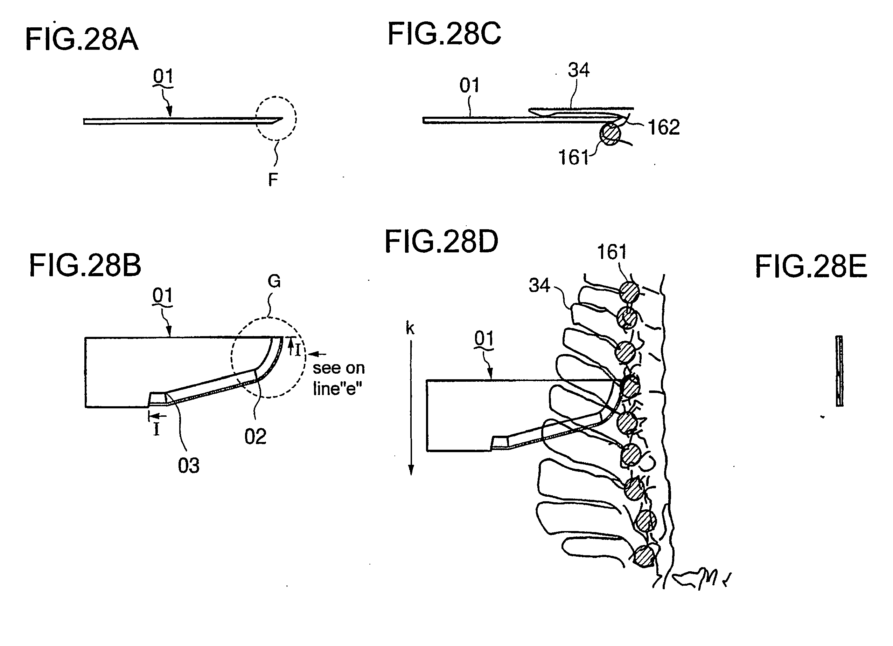

FIG. 28A through FIG. 28 (e) show a conventional cutting blade.

The blade tip F formed in region "I" is not a double-ground blade. Accordingly, the conventional blade does not easily intrude into the boundary between the spinous processes and the meat.

Further, due to a lack of backbone contact portion B, the conventional cutting blade is not guided between the spinous processes and the mammillary processes. Accordingly, the conventional cutting blade easily come out from the gap of spinous processes, damages the loin meat and the meat separation process is not stable.

Further, the bent portion 03 separate the meat, ahead of the blade tip G. Accordingly, the conventional blade easily come out from the gap between the spinous processes and does not follow the shape of the bone and meat.

According to the present invention, the fixation and the centering of the headless carcass is facilitated without employing any large-scaled apparatus, thereby providing an automatic spine separation apparatus which can execute the separation of the spine from the carcass which was difficult previously. Accordingly, the manual operation is excluded and the operational efficiency is greatly improved.

The fixation and centering of a pair of the carcasses in the sensing step and the cutting step are facilitated, because the pair of the carcasses MR and ML positioned opposite with each other in the right and left rows is hung at the ankles by the gambrel stick, is intermittently transported in the horizontal direction by the transport unit T and is stopped precisely at the sensing position of the sensor station S and at the cutting position of the cutting station C.

Further, the fixing unit 41 and the fixing apparatus 80 for fixing the gambrel stick in the sensor station S and the cutting station C surely stop the carcass at the sensing position and the cutting position, thereby facilitating the sensing step and the cutting step.

Further, the cutting position of the spinous processes of each carcass is precisely detected, even if the carcass is different in its size and shape, because the sensing apparatus 50 and 60 as shown in FIG. 9 and FIG. 11, respectively, detect the upper cutting end and the lower cutting end for separating the spinous processes from the meats.

Further, the backbone fixing guides 112 are inserted without fail between the backbone cutting surfaces and the cutting blades 114 are inserted without fail between the spinous processes 34 and the mammillary processes 161, because the distance between the pair of the carcasses is widened by the work opening guide 100, then, the guide surfaces 112a of the backbone fixing guides 112 contact the backbone cutting surfaces, then, the rollers 113 fix the end surface of the backbones 37, thereby cutting and separating the spines from the meats.

Further, the spine attached to the meat is surely separated, because the carcass is held by the ankle holding apparatus 120, the first holding apparatus 130 and second holding apparatus 140, thereby precisely aligning the cutting blade 114 between the spinous processes 34 and the mammillary processes 161.

Further, the cutting blade 114 as shown in FIG. 27 easily enters the region between the spine and the meat, because the blade edge C is oriented in the forward direction and works as a guide.

Further, the cutting blade 114 does not come out from the gap between the spinous processes, because the backbone contact portion B is two or more times longer than the gap between spinous processes..

Further, the meat is not left at all at the backbone, thereby maintaining a stable yield of obtaining the meat, because the backbone contact portion B is directed almost vertically, the blade end D separates the spinous processes from the meat prior to the backbone contact portion B, and then, the backbone contact portion B separates the meat at the root hollow portion 162.

### Industrial Applicability

The present invention is applicable for a spinous processes separation apparatus and method for the carcass of slaughtered animals such as pigs, cows and sheep.

## Claims

1. An apparatus for separating spinous processes from a carcass of a slaughtered animal which is half-cut from a backbone, which comprises:
transport means (T) for transporting a pair of right (MR) and left (ML) carcass halves which have been cut along its backbone;
a sensor station (5) which is disposed at a transport path of said transport means and detects right and left cutting positions where spinous processes of saidright and left half-carcasses are cut; and
a cutting station (C) which is disposed downstream of said sensor station (S) and separates said spinous processes from said right and left half-carcasses, on the basis of said cutting positions, **characterized in that** :
said transport means (T):
hangs said carcass halves without changing the respective original eight-and left-side attitude, by hanging them at an ankle by using as hanging member a gambrel stick (11);
transports intermittently said carcass in a horizontal line; and
stops said carcass halves at a prescribed sensing position (3) in said sensor station (S) and at a prescribed cutting position in said cutting station (C).

2. The apparatus according to claim 1, wherein said transport means (T) comprises fixing means (41) for fixing said gambrel stick (11) at said prescribed sensing position and at said prescribed cutting position.

3. The apparatus according to claim 1, wherein said sensor station (S) comprises:
end detection means (50,60) for detecting, respectively an upper cutting end and a lower cutting end of said spinous processes; and
oscillation suppress means (57,65,71) for suppressing oscillations of said carcass halves, when said upper cutting end and said lower cutting end are detected,
wherein said end detection means (50,60) are provided, between said right and left carcasses, with detecting jigs (51a, 51b; 61a, 61b) which can move up and down, and said upper cutting end and said lower cutting end are prescribed positions at which said detecting jigs contact an upper reference part and a lower reference part of said carcass halves.

4. The apparatus according to claim 3, wherein:
said upper reference part is a pubis bone (59); and
said lower reference part is an antebrachial bone root (32).

5. The apparatus according to claim 1, wherein said cutting station (C) comprises:
a work opening guide (100) which enters between said pair of right (MR) and left (ML) carcass halves from belly sides and widens a distance between said pair of right and left carcass halves;
a backbone fixing guide (112) which enters between said pair of right and left carcass halves from backbone sides and contacts and fixes a backbone cutting surface (115);
a pair of right and left cutting blades (114) which enter between said pair of right and left carcass halves from said backbone sides and are fixed in a horizontal direction in such a manner that said pair of right and left cutting blades (114) contacts root hollows between said right and left spinous processes and right and left mammillary processes; and
holding means (130,140) for holding said pair of right and left carcasses, when said pair of right and left cutting blades (114) is inserted into said pair of right and left carcass halves, or when said pair of right and left cutting blades (114) cuts and separates said right and left spinous processes from said right and left carcass halves.

6. The apparatus according to claim 5, wherein said backbone fixing guide (112) has a roller (113) of which surface contacts a tip of said backbone.

7. The apparatus according to claims 3 and 5, which further comprises:
horizontally moving means (117, 121, 122) for moving said pair of right and left cutting blades (114) to and from said pair of right and left carcass halves; and
vertically moving means (151,152,153,154) for moving said pair of right and left cutting blades vertically together with said backbone fixing guide (112),
wherein said pair of right and left cutting blades (114) is inserted, at said upper cutting end, between said pair of right and left carcass halves, then, is moved downward and is moved out, at said lower cutting end, from the carcass halves.

8. The apparatus according to claim 1, which further comprises an ankle holding means in the cutting station (C), which comprises:
a carcass (half) holding member (120,122) which moves toward said carcass half from a belly side;
a hollow part (122a) which is provided in said holding member (122) and loosely fits a pair of an ankle of said carcass half, and
a holding surface (123) which is provided at a lower and outer portion of said carcass half holding member (122) and has a tapered surface (123a) that opens in a direction from an inside to an outside of said carcass half, thereby contacting a ham of said carcass and giving a torsion force directed from an outside to an inside of said carcass.

## Patentansprüche

1. Vorrichtung zum Abtrennen von Dornfortsätzen aus einem tierischen Schlachtkörper, der von einer Wirbelsäule aus in zwei Stücke geschnitten ist, wobei die Vorrichtung umfasst:
eine Transporteinrichtung (T) zum Transportieren eines Paars von einer rechten (MR) und einer linken (ML) Schlachtkörperhälfte, die entlang der Wirbelsäule geschnitten worden sind;
eine Sensorstation (5), die an einem Transportweg der Transporteinrichtung angeordnet ist und rechte und linke Schneidpositionen detektiert, an denen Dornfortsätze der rechten und der linken Schlachtkörperhälfte geschnitten werden; und
eine Schneidstation (C), die nach der Sensorstation (S) angeordnet ist und die Dornfortsätze von der rechten und der linken Schlachtkörperhälfte auf der Grundlage der Schneidpositionen trennt, **gekennzeichnet dadurch dass** die Transporteinrichtung (T)
die Schlachtkörperhälften aufhängt, ohne deren jeweilige ursprüngliche rechte und linke Seitenausrichtung zu ändern, indem sie mittels eines Aufhängebügels (11) als Aufhängeelement an einem Knöchel aufgehängt werden;
den Schlachtkörper in einer waagerechten Linie in unterbrochener Weise transportiert; und
die Schlachtkörperhälften an einer vorgeschriebenen Sensorposition (3) in der Sensorstation (S) und an einer vorgeschriebenen Schneidposition in der Schneidstation (C) anhält.

2. Vorrichtung nach Anspruch 1, wobei die Transporteinrichtung (T) eine Befestigungseinrichtung (41) zum Befestigen des Aufhängebügels (11) an der vorgeschriebenen Sensorposition und an der vorgeschriebenen Schneidposition umfasst.

3. Vorrichtung nach Anspruch 1, wobei die Sensorstation (S) umfasst:
eine Endendetektionseinrichtung (50, 60) zum Detektieren jeweils eines oberen Schneidendes und eines unteren Schneidendes des Dornfortsatzes; und
eine Schwingungsunterdrückungseinrichtung (57, 65, 71) zum Unterdrücken von Schwingungen der Schlachtkörperhälften, wenn das obere und das untere Schneidende detektiert werden,
wobei die Endendetektionseinrichtung (50, 60), zwischen der rechten und der linken Schlachtkörperhälfte, mit Detektionswerkzeugen (51a, 51b; 61a, 61b) ausgestattet ist, die sich nach oben und nach unten bewegen können, und wobei das obere und das untere Schneidende an vorgeschriebenen Positionen angeordnet sind, an denen die Detektionswerkzeuge einen oberen und einen unteren Referenzteil der Schlachtkörperhälften berühren.

4. Vorrichtung nach Anspruch 3, wobei
der obere Referenzteil ein Schambeinknochen (59) ist und
der untere Referenzteil eine Antebrachial-Knochenwurzel (32) ist.

5. Vorrichtung nach Anspruch 1, wobei die Schneidstation (C) umfasst:
eine Bearbeitungsöffnungsführung (100), die zwischen dem Paar rechter (MR) und linker (ML) Schlachtkörperhälften von den Bauchseiten aus eintritt und einen Abstand zwischen dem Paar rechter und linker Schlachtkörperhälften erweitert;
eine Wirbelsäulenfixierungsführung (112), die zwischen dem Paar rechter und linker Schlachtkörperhälften von den Wirbelsäulenseiten aus eintritt und eine Wirbelsäulenschneidfläche (115) berührt und fixiert;
ein Paar rechter und linker Schneidklingen (114), die zwischen dem Paar rechter und linker Schlachtkörperhälften von den Wirbelsäulenseiten aus eintreten und in einer waagerechten Richtung so befestigt sind, dass das Paar rechter und linker Schneidklingen (114) Wurzelaussparungen zwischen den rechten und linken Dornfortsätzen und rechten und linken Processi Mamillares berühren, und
einer Halteeinrichtung (130, 140) zum Halten des Paars rechter und linker Schlachtkörperhälften, wenn das Paar rechter und linker Schneidklingen (114) in das Paar rechter und linker Schlachtkörperhälften eingeführt worden ist oder wenn das Paar rechter und linker Schneidklingen (114) die rechten und linken Dornfortsätze von den rechten und linken Schlachtkörperhälften schneidet und abtrennt.

6. Vorrichtung nach Anspruch 5, wobei die Wirbelsäulenfixierungsführung (112) eine Rolle (113) aufweist, deren Fläche eine Spitze der Wirbelsäule berührt.

7. Vorrichtung nach Anspruch 3 oder 5, die ferner umfasst:
eine waagerechte Bewegungseinrichtung (117, 121, 122) zum Bewegen des Paars rechter und linker Schneidklingen (114) zum Paar rechter und linker Schlachtkörperhälften hin und von diesen weg; und
eine senkrechte Bewegungseinrichtung (151, 152, 153, 154) zum Bewegen des Paars rechter und linker Schneidklingen zusammen mit der Wirbelsäulenfixierungsführung (112) in senkrechter Richtung,
wobei das Paar rechter und linker Schneidklingen (114), am oberen Schneidende, zwischen dem Paar rechter und linker Schlachtkörperhälften eingeführt wird und dann nach unten und, am unteren Schneidende, aus den Schlachtkörperhälften herausbewegt wird.

8. Vorrichtung nach Anspruch 1, ferner umfassend eine Knöchelhalteeinrichtung in den Schneidstation (C), sie umfasst:
ein Schlachtkörperhälften-Halteelement (120, 122), das sich von einer Bauchseite zur Schlachtkörperhälfte hin bewegt;
ein Aussparungsteil (122a), das am Halteelement (122) angeordnet ist und lose mit einem Knöchelpaar der Schlachtkörperhälfte zusammenpasst, und
eine Haltefläche (123), die an einem unteren und äußeren Abschnitt des Schlachtkörperhälften-Haltelements (122) angeordnet ist und eine sich verjüngende Oberfläche (123a) aufweist, die sich in einer Richtung vom Inneren der Schlachtkörperhälfte zum Äußeren hin öffnet, wodurch sie einen Schinken des Schlachtkörpers berührt und eine vom Äußeren des Schlachtkörpers zum Inneren gerichtete Drehkraft ausübt.

## Revendications

1. Appareil de séparation des apophyses épineuses d'une carcasse d'un animal abattu qui est découpée en deux le long de la colonne vertébrale, qui comprend :
un moyen de transport (T) pour transporter une paire de demi-carcasses droite (MR) et gauche (ML) qui ont été coupées le long de la colonne vertébrale ;
une station de détection (S) qui est disposée au niveau d'un trajet de transport dudit moyen de transport et détecte des positions de découpe droite et gauche là où des apophyses épineuses desdites demi-carcasses droite et gauche sont découpées ; et
une station de découpe (C) qui est disposée en aval de ladite station de détection (S) et sépare lesdites apophyses épineuses d'avec lesdites demi-carcasses droite et gauche sur la base desdites positions de découpe,
**caractérisé en ce que**
ledit moyen de transport (T) :
suspend lesdites demi-carcasses sans modifier la disposition d'origine respective des côtés droit et gauche, en les suspendant au niveau d'une cheville en utilisant un jambier (11) comme élément de suspension ;
transporte de manière intermittente ladite carcasse sur une ligne horizontale; et
arrête lesdites demi-carcasses au niveau d'une position de détection recommandée (3) dans ladite station de détection (S) et au niveau d'une position de découpe recommandée dans ladite station de découpe (C).

2. Appareil selon la revendication 1, dans lequel ledit moyen de transport (T) comprend un moyen de fixation (41) pour fixer le jambier (11) au niveau de ladite position de détection recommandée et au niveau de ladite position de découpe recommandée.

3. Appareil selon la revendication 1, dans lequel ladite station de détection (5) comprend :
des moyens de détection d'extrémité (50, 60) pour détecter respectivement une extrémité de découpe supérieure et une extrémité de découpe inférieure desdites apophyses épineuses ; et
des moyens de suppression d'oscillation (57, 65, 71) pour supprimer les oscillations desdites demi-carcasses, lorsque ladite extrémité de découpe supérieure et ladite extrémité de découpe inférieure sont détectées,
dans lequel lesdits moyens de détection d'extrémité (50, 60) sont fournis, entre lesdites carcasses droite et gauche, avec des gabarits de détection (51a, 51b ; 61a, 61b) qui peuvent se relever et se descendre, et ladite extrémité de découpe supérieure et ladite extrémité de découpe inférieure sont des positions recommandées au niveau desquelles lesdits gabarits de détection viennent en contact avec une partie de référence supérieure et une partie de référence inférieure desdites demi-carcasses.

4. Appareil selon la revendication 3, dans lequel
ladite partie de référence supérieure est un os pubien (59), et
ladite partie de référence inférieure est une base osseuse antébrachiale (32).

5. Appareil selon la revendication 1, dans lequel ladite station de découpe (C) comprend :
un guide d'ouverture de travail (100) qui pénètre entre ladite paire de demi-carcasses droite (MR) et gauche (ML) du côté des panses et agrandit une distance entre ladite paire de demi-carcasses droite et gauche ;
un guide de blocage (112) de colonne vertébrale qui pénètre entre ladite paire de demi-carcasses droite et gauche du côté de la colonne vertébrale et vient en contact avec une surface de découpe (115) de colonne vertébrale en la bloquant ;
une paire de lames de découpe droite et gauche (114) qui pénètre entre ladite paire de demi-carcasses droite et gauche du côté de ladite colonne vertébrale et sont bloquées dans une direction horizontale de telle manière que ladite paire de lames de découpe droite et gauche (114) viennent en contact avec des cavités de base entre lesdites apophyses épineuses droite et gauche et des apophyses mamillaires droite et gauche ; et
des moyens de maintien (130, 140) pour maintenir ladite paire de demi-carcasses droite et gauche, lorsque ladite paire de lames de découpe droite et gauche (114) sont insérées dans ladite paire de demi-carcasses droite et gauche, ou lorsque ladite paire de lames de découpe droite et gauche (114) découpent et séparent lesdites apophyses épineuses gauche et d'avec lesdites demi-carcasses droite et gauche.

6. Appareil selon la revendication 5, dans lequel ledit guide de blocage (112) de colonne vertébrale possède un rouleau (113) dont la surface vient en contact avec une extrémité de ladite colonne vertébrale.

7. Appareil selon les revendications 3 et 5, qui comprend en outre :
des moyens de déplacement horizontaux (117, 121, 122) pour déplacer ladite paire de lames de découpe droite et gauche (114) vers et à partir de ladite paire de demi-carcasses droite et gauche ; et
des moyens de déplacement verticaux (151, 152, 153, 154) pour déplacer ladite paire de lames de découpe droite et gauche verticalement à l'unisson dudit guide de blocage (112) de colonne vertébrale ;
dans lequel ladite paire de lames de découpe droite et gauche (114) est insérée, au niveau de l'extrémité de découpe supérieure, entre ladite paire de demi-carcasses droite et gauche, puis est déplacé vers le bas et est retirée des demi-carcasses, au niveau de ladite extrémité de découpe inférieure.

8. Appareil selon la revendication 1, qui comprend en outre un moyen de maintien de cheville dans la station de découpe (C), qui comprend :
un élément de maintien (120, 122) de demi-carcasse qui se déplace en direction de ladite demi-carcasse du côté de la panse ;
une partie creuse (122a) qui est fournie dans ledit élément de maintien (122) et s'ajuste de manière lâche par paire à une cheville de ladite demi-carcasse, et
une surface de maintien (123) qui est fournie au niveau d'une partie supérieure et extérieure dudit élément de maintien (122) de demi-carcasse et possède une surface conique (123a) qui s'ouvre dans une direction allant de l'intérieur vers l'extérieur de ladite demi-carcasse, venant aussi en contact avec un jambon de ladite carcasse et imprimant une force de torsion dirigée de l'extérieur vers l'intérieur de ladite carcasse.
